# EUROPEAN PATENT APPLICATION

(11) **EP 4 745 631 A1**
(43) Date of publication of application: **20.05.2026**
(21) Application number: 24859745.2
(22) Date of filing: 27.08.2024
(51) Int. Cl.: G02B 5/02, F21S 2/00, G02B 1/113, G02B 1/115, G02B 1/118, G02F 1/1335, G02F 1/13357, F21Y 115/10

(54) **LIGHT DIFFUSION SHEET, BACKLIGHT UNIT, LIQUID CRYSTAL DISPLAY DEVICE AND INFORMATION DEVICE**

(30) Priority: 28.08.2023 JP 2023137915; 02.08.2024 JP 2024127774
(71) Applicant: KEIWA Incorporated, Tokyo 103-0025 (JP)
(72) Inventor: TSAI Chengheng, Tokyo 103-0025 (JP); MANABE Tomiko, Tokyo 103-0025 (JP)
(74) Representative: Becker Kurig & Partner Patentanwälte mbB
(86) International application number: PCT/JP2024/030423
(87) International publication number: WO 2025/047713

(57) **Abstract**

A light diffusion sheet 43 has a plurality of depressed portions 22 approximately shaped like inverted polygonal pyramids on a first surface 43a. The first surface 43a has a light reflection preventing structure 101. The light reflection preventing structure 101 may be, for example, a vapor-deposited layer covering the surfaces of the plurality of depressed portions 22 or a moth-eye structure.

## Description

### Technical Field

The present disclosure relates to a light diffusion sheet, a backlight unit, a liquid crystal display device, and an information device.

### Background Art

Liquid crystal display devices are widely used as display devices in various information devices such as notebook PCs, smartphones, and tablet terminals. Predominant backlights of liquid crystal display devices are direct-type systems in which a light source is disposed on the back surface of a liquid crystal panel.

When a direct-type backlight is adopted, a light diffusion sheet is used in order to diffuse light from a point source such as an LED (Light Emitting Diode) and obtain uniform brightness and chromaticity over the entire display screen (see PTL 1).

### Citation List

### Patent Literature

PTL 1: Japanese Patent Application Publication No. 2011-129277

### Summary of Invention

### Technical Problem

However, in the conventional direct-type backlight, the uniformity of brightness disadvantageously decreases when the thickness of the light diffusion sheet is reduced to achieve a thinner system.

An object of the present disclosure is to provide a light diffusion sheet capable of suppressing a reduction in brightness uniformity even when the light diffusion sheet is reduced in thickness, a backlight unit including the light diffusion sheet, a liquid crystal display device, and an information device.

### Solution to Problem

In order to attain the object, a light diffusion sheet according to the present disclosure is a light diffusion sheet having a plurality of depressed portions approximately shaped like inverted polygonal pyramids on a first surface, and a light reflection preventing structure is provided on the first surface.

According to the light diffusion sheet according to the present disclosure, the light reflection preventing structure is provided on the first surface having the plurality of depressed portions approximately shaped like inverted polygonal pyramids, so that the light transmittance increases on the first surface while the light reflectance decreases. This can suppress a reduction in the effect of light diffusion by the depressed portions approximately shaped like inverted polygonal pyramids; the reduction being caused by light reflection on the first surface. Therefore, even when the light diffusion sheet is reduced in thickness, a reduction in brightness uniformity can be suppressed, allowing a further reduction in the thickness of the backlight.

In the light diffusion sheet of the present disclosure, the light reflection preventing structure may be a vapor-deposited layer covering the surfaces of the plurality of depressed portions. With this configuration, the light reflection preventing structure is easily provided on the first surface having the plurality of depressed portions. In this case, if the vapor-deposited layer includes a silicon oxide layer and a metal oxide layer, the light transmittance and light reflectance on the first surface can be easily adjusted by the light reflection preventing structure.

In the light diffusion sheet according to the present disclosure, if the light reflection preventing structure is a moth-eye structure, the light reflection preventing structure can be obtained with an excellent light reflection suppressing effect.

In the light diffusion sheet according to the present embodiment, if the plurality of depressed portions are shaped approximately like inverted square pyramids, the light diffusion sheet can be obtained with excellent light diffusion.

In the light diffusion sheet according to the present disclosure, a second surface on the opposite side from the first surface may be a matte surface or a mirror surface. This can suppress a reduction in the effect of light diffusion by the depressed portions approximately shaped like inverted polygonal pyramids; the reduction being caused by the shape of the second surface.

A backlight unit according to the present disclosure is built into a liquid crystal display device and guides, to a display screen, light emitted from a plurality of light sources, the backlight unit including the light diffusion sheet according to the present disclosure between the display screen and the plurality of light sources.

The backlight unit according to the present disclosure includes the light diffusion sheet according to the present disclosure. Therefore, even when the light diffusion sheet is reduced in thickness, a reduction in brightness uniformity can be suppressed, allowing a further reduction in the thickness of the backlight unit.

In the backlight unit according to the present disclosure, the light diffusion sheet may be disposed with the first surface facing the display screen. This configuration can avoid a reduction in the effect of light diffusion by the depressed portions of the first surface; the reduction being caused by the second surface. If the first surface has the light reflection preventing structure for selectively preventing reflection of light (vertical incident light) incident in the normal direction of the sheet surface of the light diffusion sheet, that is, the light reflection preventing structure in which vertical incident light has a higher transmittance than other incident light beams, the light diffusion sheet may be disposed with the second surface facing the display screen.

In the backlight unit according to the present disclosure, the plurality of stacked light diffusion sheets may be disposed between the display screen and the plurality of light sources. The brightness uniformity increases with the number of disposed light diffusion sheets.

In the backlight unit according to the present disclosure, a color conversion sheet for converting the wavelength of light may be further provided between the plurality of light sources and the light diffusion sheet. This eliminates the need for an expensive white light source, thereby reducing the cost. In addition, a reduction in the effect of light diffusion by the light diffusion sheet can be avoided, the reduction being caused by the color conversion sheet.

In the backlight unit according to the present disclosure, the plurality of light sources may be two-dimensionally arranged with a pitch of 10 mm or less. Thus, the light diffusion sheet having the light reflection preventing structure can sufficiently obtain the effect of suppressing a reduction in brightness uniformity.

A liquid crystal display device according to the present disclosure includes the backlight unit according to the present disclosure and a liquid crystal display panel.

The liquid crystal display device according to the present disclosure includes the backlight unit according to the present disclosure, allowing a further reduction in thickness.

An information device according to the present disclosure includes the liquid crystal display device according to the present disclosure.

The information device according to the present disclosure includes the liquid crystal display device according to the present disclosure, allowing a further reduction in thickness. Advantageous Effects of Invention

The present disclosure can provide a light diffusion sheet capable of suppressing a reduction in brightness uniformity even when the light diffusion sheet is reduced in thickness, a backlight unit including the light diffusion sheet, a liquid crystal display device, and an information device.

### Brief Description of Drawings

[Fig. 1] Fig. 1 is a cross-sectional view of a liquid crystal display device according to an embodiment.
[Fig. 2] Fig. 2 is a cross-sectional view of a backlight unit according to the embodiment.
[Fig. 3] Fig. 3 is a plan view showing an arrangement example of light sources in the backlight unit shown in Fig. 2.
[Fig. 4] Fig. 4 is a perspective view of a light diffusion sheet according to the embodiment.
[Fig. 5] Fig. 5 is a cross-sectional view of the light diffusion sheet according to an example.
[Fig. 6] Fig. 6 shows the incident angle dependence of transmittance with respect to light having a wavelength of 450 nm when the deposited layer is provided on a polycarbonate sheet having a thickness of 100 µm with mirror-finished surfaces.
[Fig. 7] Fig. 7 shows the incident angle dependence of reflectance with respect to light having a wavelength of 450 nm when the deposited layer is provided on a polycarbonate sheet having a thickness of 100 µm with mirror-finished surfaces.
[Fig. 8] Fig. 8 is a cross-sectional view of a backlight unit used for evaluating additional examples.

### Description of Embodiments

### (Embodiment)

An embodiment of the present disclosure will be described below with reference to the drawings. It should be noted that the scope of the present disclosure is not limited to the embodiment described below, and any modifications can be made without departing from the scope of the technical ideas of the present disclosure.

### <Liquid crystal display device>

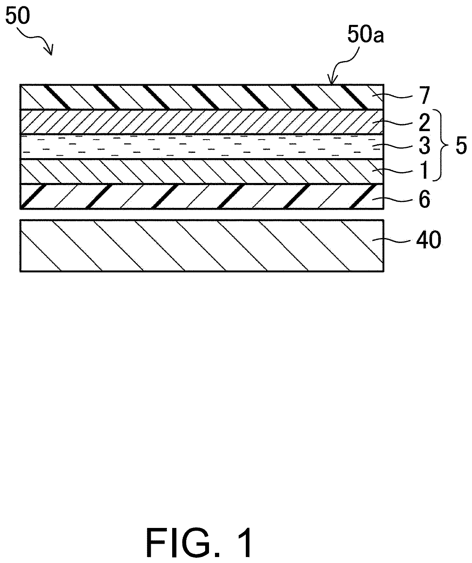

As shown in Fig. 1, a liquid crystal display device 50 according to the present embodiment includes a liquid crystal display panel 5, a first polarizing plate 6 attached to the underside of the liquid crystal display panel 5, a second polarizing plate 7 attached to the upper side of the liquid crystal display panel 5, and a backlight unit 40 provided on the back side of the liquid crystal display panel 5 with the first polarizing plate 6 interposed therebetween. The liquid crystal display panel 5 includes a TFT substrate 1 and a CF substrate 2 opposed to each other, and a liquid crystal layer 3 provided between the TFT substrate 1 and the CF substrate 2.

The shape of a display screen 50a of the liquid crystal display device 50 may be rectangular or square in front view (from above in Fig. 1). The shape is not limited thereto and may be any shape, for example, a rectangle or square with rounded corners, an ellipse, a circle, a trapezoid, or the shape of an instrument panel for an automobile.

In the liquid crystal display device 50, a voltage of a predetermined magnitude is applied to the liquid crystal layer 3 in each sub-pixel corresponding to each pixel electrode, so that the alignment state of the liquid crystal layer 3 is changed. This adjusts the transmittance of light entering from the backlight unit 40 through the first polarizing plate 6. The light is emitted through the second polarizing plate 7 to display an image.

The liquid crystal display device 50 according to the present embodiment is used as a display device built into various information devices (for example, an in-vehicle device for car navigation or the like, a personal computer, a mobile phone, a portable information terminal, a portable game machine, a copy machine, a ticket vending machine, or an automated teller machine).

For example, the TFT substrate 1 includes a plurality of TFTs provided in a matrix pattern on a glass substrate, an interlayer insulating film provided so as to cover the TFTs, a plurality of pixel electrodes that are provided in a matrix pattern on the interlayer insulating film and are connected to the respective TFTs, and an alignment film provided so as to cover the pixel electrodes. For example, the CF substrate 2 includes a black matrix provided in a grid pattern on a glass substrate, a color filter including a red layer, a green layer, and a blue layer that are provided between the grids of the black matrix, a common electrode provided so as to cover the black matrix and the color filter, and an alignment film provided so as to cover the common electrode. The liquid crystal layer 3 is composed of a nematic liquid crystal material or the like containing liquid crystal molecules with electro-optic characteristics. For example, the first polarizing plate 6 and the second polarizing plate 7 include a polarizer layer with a polarizing axis in one direction and a pair of protective layers with the polarizer layer interposed therebetween.

### <Backlight unit>

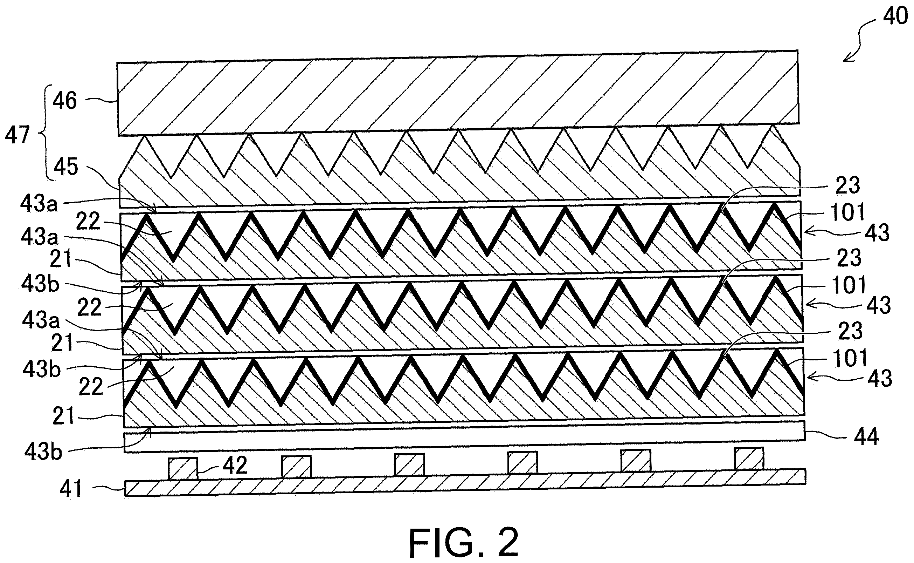

As shown in Fig. 2, the backlight unit 40 of the present embodiment mainly includes a reflective sheet 41, a plurality of small light sources 42 arranged two-dimensionally on the reflective sheet 41, and a light diffusion sheet 43 provided above the plurality of small light sources 42. A plurality of (three in the present example) light diffusion sheets 43 may be stacked instead. A brightness enhancement sheet 47 may be provided on the upper side of the light diffusion sheet 43. A color conversion sheet 44 may be provided between the plurality of small light sources 42 and the brightness enhancement sheet 47 (in the present example, between the plurality of small light sources 42 and the light diffusion sheet 43). The light diffusion sheet 43 will be described in detail later.

### [Reflective sheet]

The reflective sheet 41 is constituted by a white polyethylene terephthalate resin film, a silver vapor-deposited film, or the like, for example.

### [Light source]

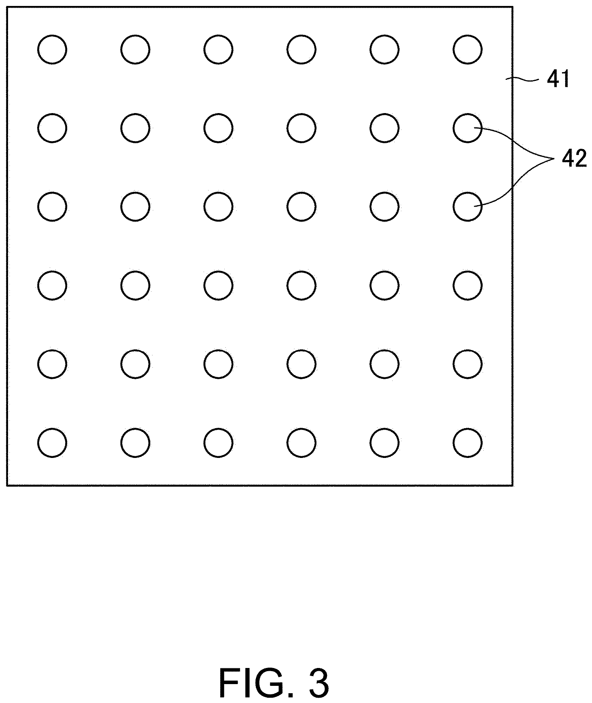

The type of small light source 42 is not particularly limited. For example, the small light source 42 may be an LED element or a laser element. An LED element may be used from the perspectives of cost and productivity. In order to adjust the outgoing light angle characteristics of an LED element serving as the small light source 42, a lens may be attached to the LED element. For example, as shown in Fig. 3, the plurality of small light sources 42 composed of LED elements may be arranged at regular intervals in a two-dimensional array on the reflective sheet 41. The small light source 42 may have a rectangular shape in plan view. In this case, the length of one side may be 10 µm or more (preferably 50 µm or more) and 20 mm or less (preferably 10 mm or less, more preferably 5 mm or less). The number of arranged small light sources 42 is not particularly limited. When the plurality of small light sources 42 is arranged in a distributed manner, the small light sources 42 are preferably arranged with regularity on the reflective sheet 41. The arrangement with regularity means an arrangement with a fixed law. For example, the small light sources 42 arranged at equal intervals correspond to this arrangement. When the small light sources 42 are arranged at equal intervals, the center distance (array pitch) between the two adjacent small light sources 42 may be 0.5 mm or more (preferably 2 mm or more) and 20 mm or less (preferably 10 mm or less).

In the present example, a blue light source is used as the small light source 42. For example, the blue light source may emit light of x < 0.24 and y < 0.18 in CIE1931 chromaticity coordinates. A white light source may be used as the small light source 42. The white light source is composed of an LED element with a peak wavelength in a blue region, an LED element with a peak wavelength in a green region, and an LED element with a peak wavelength in a red region. For example, the white light source may emit light of 0.24 < x < 0.42 and 0.18 < y < 0.48 in CIE1931 chromaticity coordinates.

### [Color conversion sheet]

The color conversion sheet 44 is, for example, a wavelength conversion sheet for converting light from the small light source 42, which is a blue light source, into light having a wavelength of any color (for example, green or red) as a peak wavelength. For example, the color conversion sheet 44 converts blue light with a wavelength of 450 nm into green light with a wavelength of 540 nm and red light with a wavelength of 650 nm. In this case, when the small light sources 42 that emit blue light with a wavelength of 450 nm are used, the blue light is partially converted into green light and red light by the color conversion sheet 44, and thus the light having passed through the color conversion sheet 44 turns white light. For example, a QD (quantum dot) sheet or a fluorescent sheet or the like may be used as the color conversion sheet 44. When white light sources are used as the small light sources 42, the color conversion sheet 44 may be omitted. The color conversion sheet 44 may be disposed on or below the light diffusion sheet 43 or between the light diffusion sheets 43 if the color conversion sheet 44 is located between the small light source 42 and the brightness enhancement sheet 47.

### [Brightness enhancement sheet]

The brightness enhancement sheet 47 has a structure in which a first prism sheet 45 and a second prism sheet 46 are sequentially stacked from the vicinity of the small light sources 42. The first prism sheet 45 and the second prism sheet 46 have, for example, a plurality of groove lines that are adjacent to each other and are shaped like isosceles triangles in cross section. A prism interposed between a pair of adjacent groove lines has a vertex angle of about 90°. The groove lines formed on the first prism sheet 45 and the groove lines formed on the second prism sheet 46 are arranged so as to be orthogonal to each other. The first prism sheet 45 and the second prism sheet 46 may be integrally formed. For example, a PET (polyethylene terephthalate) film shaped like a prism using a UV-curable acrylic resin may be used as the first prism sheet 45 and the second prism sheet 46.

Although not illustrated, a polarizing sheet may be provided on the second prism sheet 46. The polarizing sheet prevents the first polarizing plate 6 of the liquid crystal display device 50 from absorbing light emitted from the backlight unit 40, thereby enhancing the brightness of the display screen 50a.

In the present example, a prism sheet is used as the brightness enhancement sheet 47. Alternatively, another optical sheet capable of increasing the brightness of light emitted from the small light sources 42 may be used instead.

### <Light diffusion sheet>

In the backlight unit 40, one or more light diffusion sheets 43 are disposed. When the plurality of light diffusion sheets 43 are provided, the light diffusion sheets 43 may have the same structure or different structures. The light diffusion sheet 43 may be a "light diffusion sheet", or may be a plate-like "light diffusion plate" or a film-like "light diffusion film".

The light diffusion sheet 43 has a plurality of depressed portions 22 approximately shaped like inverted polygonal pyramids on a first surface 43a, and a light reflection preventing structure 101 is provided on the first surface 43a. When the plurality of light diffusion sheets 43 are provided, at least one of the light diffusion sheets 43 has the plurality of depressed portions 22 approximately shaped like inverted polygonal pyramids on the first surface 43a, and the light reflection preventing structure 101 is provided on the first surface 43a. The detail of the light reflection preventing structure 101 will be described in detail later.

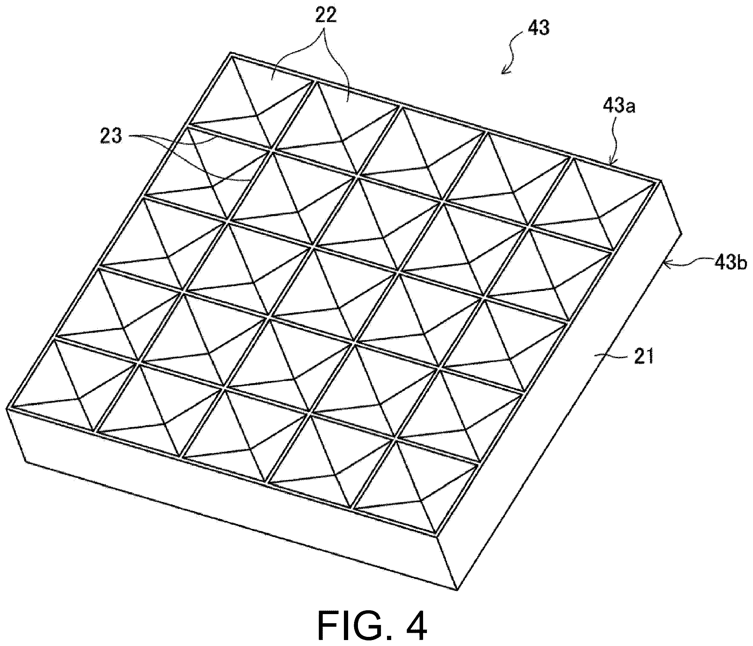

The light diffusion sheet 43 includes a base material layer 21. The plurality of depressed portions 22 are provided on the first surface (in the present example, a light emission surface) 43a of the light diffusion sheet 43. In the light diffusion sheet 43 in Fig. 2, the first surface 43a having the plurality of depressed portions 22 serves as a light emission surface. Alternatively, the first surface 43a may be used as a light emission surface. In the present example, the plurality of depressed portions 22 are approximately shaped like inverted square pyramids as shown in Fig. 4. Fig. 4 shows a state in which the depressed portions 22 approximately shaped like inverted square pyramids are arranged in a five-by-five matrix on the first surface 43a of the light diffusion sheet 43. The number of depressed portions 22 in an actual arrangement is quite larger than that of the drawing. The adjacent depressed portions 22 are separated by ridgelines 23. The array pitch of the depressed portions 22 is, for example, about 50 µm or more and about 500 µm or less. An angle formed by a wall surface of the depressed portion 22 (an inclined surface of an approximately inverted polygonal pyramid or an inclined surface of an approximately inverted truncated polygonal pyramid) and a sheet surface (a virtual mirror surface without the depressed portions 22) of the light diffusion sheet 43 is set to, for example, 40° or more and 65° or less. In other words, the vertex angle of the depressed portion 22 is set to, for example, 50° or more and 100° or less. Although a second surface 43b of the light diffusion sheet 43 may be a mirror surface, the second surface 43b may be a matte surface or have a plurality of depressed portions like the depressed portions 22 in order to improve light diffusion.

The plurality of depressed portions 22 are not limited to approximately inverted square pyramids and may be approximately shaped like inverted polygonal pyramids or inverted truncated polygonal pyramids. In the present disclosure, the shapes of the depressed portions 22 may be referred to as "approximately inverted polygonal pyramids" including approximately inverted polygonal pyramids. The plurality of depressed portions 22 may be two-dimensionally arranged with regularity. "Inverted (truncated) polygonal pyramids" are preferably (truncated) triangular pyramids, (truncated) square pyramids, or (truncated) hexagonal pyramids that can be two-dimensionally arranged in a seamless manner. While a die (metal roll) is used in manufacturing steps including extrusion molding and injection molding when the depressed portions 22 are provided, an inverted (truncated) square pyramid may be selected as the "inverted (truncated) polygonal pyramid" in consideration of the accuracy of a cutting operation on a surface of the die (metal roll).

The expressions "approximately inverted polygonal pyramid" and "approximately inverted truncated polygonal pyramid" are used in consideration of difficulty in forming depressed portions like geometrically-strict inverted polygonal pyramids or geometrically-strict inverted truncated polygonal pyramids according to ordinary shape transfer techniques. It is needless to say that the expressions include the shapes of a true or substantially inverted polygonal pyramid or a true or substantially inverted truncated polygonal pyramid. In addition, "approximately" means "can be approximate" and, for example, an "approximately square pyramid" refers to a shape that can be approximate to a square pyramid. Furthermore, "approximately inverted polygonal pyramids" or "approximately inverted truncated polygonal pyramids" include shapes deformed from "inverted polygonal pyramids" or "inverted truncated polygonal pyramids" within the range of inevitable variability of shapes due to machining accuracy in industrial production.

When the plurality of depressed portions 22 are two-dimensionally arranged with regularity, the plurality of depressed portions 22 may be seamlessly provided over the surface of the light diffusion sheet 43 or may be provided at regular intervals (pitches). In addition, some of the depressed portions 22 may be randomly arranged without impairing the light diffusion effect.

The light diffusion sheet 43 may be composed of the base material layer 21 free of a diffusing agent, for example, the base material layer 21 made of a clear polycarbonate. In the case of the base material layer 21 containing a diffusing agent, the material of the diffusing agent is not particularly limited. For example, inorganic particles of silica, titanium oxide, aluminum hydroxide, and barium sulfate, and organic particles of acrylic, acrylonitrile, silicone, polystyrene, and polyamide may be used. The particle size of the diffusing agent may be set to, for example, 0.1 µm or more (preferably, 1 µm or more) and 10 µm or less (preferably, 8 µm or less) in view of the light diffusion effect.

The light diffusion sheet 43 is preferably free of a diffusing agent in view of the effect of reflection and refraction by the approximately inverted pyramid shape and the effect of light diffusion by the diffusing agent. Assuming that the content of a material (matrix) of the base material layer 21 is 100% by mass, the content of the diffusing agent may be, for example, 0.1% by mass or more (preferably 0.3% by mass or more) and 10% by mass or less (preferably 8% by mass or less). The difference between the refractive index of the diffusing agent and the refractive index of the matrix of the base material layer 21 may be 0.01 or more, preferably 0.03 or more, more preferably 0.05 or more, even more preferably 0.1 or more, and most preferably 0.15 or more. The effect of diffusion by the diffusing agent becomes insufficient when the difference between the refractive index of the diffusing agent and the refractive index of the matrix of the base material layer 21 is less than 0.01.

A resin that constitutes the matrix of the base material layer 21 is not particularly limited if the resin is a material that transmits light. For example, acrylic, polystyrene, polycarbonate, MS (methyl methacrylate-styrene copolymer) resin, polyethylene terephthalate, polyethylene naphthalate, cellulose acetate, or polyimide may be used.

The thickness of the light diffusion sheet 43 is not particularly limited. The thickness may be, for example, 1200 µm or less and 50 µm or more. If the thickness of the light diffusion sheet 43 exceeds 1200 µm, it is difficult to reduce the thickness of a liquid crystal display. If the thickness of the light diffusion sheet 43 falls below 50 µm, it is difficult to exert the effect of enhancing brightness uniformity.

The light diffusion sheet 43 may have a multilayer structure, for example, a two-layer structure including a base material layer as a first layer and a depressed-portion formation layer as a second layer. In this case, the base material layer and the depressed-portion formation layer may be configured as independent sheets, and the sheets may be stacked to constitute the light diffusion sheet 43 or may be separately arranged to constitute the light diffusion sheet 43. The thickness of the depressed-portion formation layer is larger than the maximum depth of the depressed portion 22. For example, in the case of a depressed portion having a depth of 20 µm, the thickness of the depressed-portion formation layer is set larger than 20 µm. The light diffusion sheet 43 may have a structure of three or more layers including the base material layer and the depressed-portion formation layer.

Hereinafter, a method of manufacturing the light diffusion sheet 43 will be described. In the following example, the light diffusion sheet 43 is formed like a sheet. The method of manufacturing the light diffusion sheet 43 is not particularly limited. For example, an extrusion molding method, a compression molding method, or an injection molding method may be used. When the light diffusion sheet 43 is extrusion-molded, for example, the line rate may be set to 2 m/minute or more and 30 m/minute or less and the compression line pressure may be set to 100 kgf/cm or more and 500 kgf/cm or less.

A single-layer light diffusion sheet with an uneven surface is manufactured using an extrusion molding method as follows: first, pellet-like plastic particles (a diffusing agent may be added) are fed into a single-screw extruder and are melted and kneaded while being heated. Subsequently, molten resin extruded by T-dies is cooled between two metal rolls and then is conveyed using a guide roll. The resin is cut into flat sheets by a sheet cutter, or the resin is wound up as a continuous sheet into a roll and then is cut into flat sheets by a sheet cutter, so that light diffusion sheets are fabricated. In this case, the molten resin is held using the metal rolls on which a desired uneven shape is inverted, so that the inverted shape of the roll surface is transferred to the resin. Thus, the desired uneven shape can be formed on the surface of the diffusion sheet. In addition, the shape transferred to the resin does not necessarily represent the completely transferred shape of the roll surface. Thus, the shape of the roll surface may be designed by a reverse operation from a degree of transfer.

When a light diffusion sheet having a two-layer structure with an uneven surface is manufactured using the extrusion molding method, for example, after pellet-like plastic particles necessary for forming each layer are fed into each of two single-screw extruders, steps similar to those described earlier may be performed for each layer, and then the fabricated sheets may be stacked.

Alternatively, a light diffusion sheet having a two-layer structure with an uneven surface may be fabricated as described below. First, pellet-like plastic particles necessary for forming each layer are fed into each of two single-screw extruders and are melted and kneaded while being heated. Subsequently, molten resin to form each layer is fed into one T-die and is stacked in the T-die, and then the stacked molten resin extruded by the T-die and is cooled between two metal rolls. Thereafter, the light diffusion sheet having a two-layer structure with an uneven surface may be fabricated by conveying the stacked molten resin using a guide roll and cutting the resin into flat sheets with a sheet cutter.

In addition, the light diffusion sheet may be manufactured by shape-transfer using UV (ultraviolet light) as will be described below. First, uncured ultraviolet-curing resin is applied to a roll having an inverted uneven shape to be transferred, and then a base material is pressed to the resin. Subsequently, the ultraviolet-curing resin is cured with ultraviolet irradiation in a state in which the roll filled with the resin and the base material are integrated. Thereafter, a sheet with the uneven shape formed by shape-transfer by the resin is separated from the roll. Finally, the sheet is irradiated with ultraviolet light again to completely cure the resin, so that the light diffusion sheet with an uneven surface is fabricated.

### <Light reflection preventing structure>

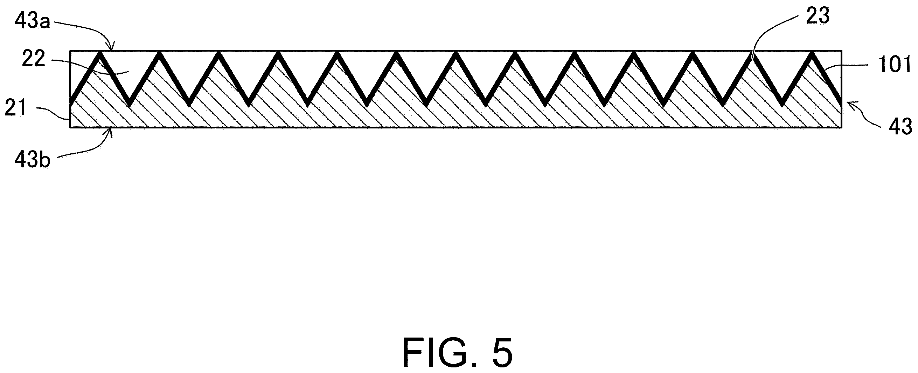

As shown in Fig. 5, in the light diffusion sheet 43, the light reflection preventing structure 101 is provided on the first surface 43a having the plurality of depressed portions 22 shaped like approximately inverted polygonal pyramids, in order to increase the light transmittance and lower the light reflectance on the first surface 43a. Over a wide range of the incident angle of light entering the light diffusion sheet 43 (the angle of inclination with respect to the normal to the sheet surface of the light diffusion sheet 43), the light reflection preventing structure 101 increases the light transmittance by 1% or more, preferably 3% or more, and more preferably 5% or more and reduces the light reflectance by 1% or more, preferably 3% or more, and more preferably 5% or more on the first surface 43a as compared with the case where the light reflection preventing structure 101 is not provided. Alternatively, the light reflection preventing structure 101 for selectively preventing reflection of light (vertical incident light) incident in the normal direction of the sheet surface of the light diffusion sheet 43, that is, the light reflection preventing structure 101 in which vertical incident light has a higher transmittance than other incident light beams may be provided on the first surface 43a.

The light reflection preventing structure 101 may be, for example, a vapor-deposited layer or a sputter layer that thinly covers the surfaces of the plurality of depressed portions 22 with a thickness of 1 µm or less. The light reflection preventing structure 101 may be a laminate including multiple layers having different refractive indexes, for example, low refractive index layers having a refractive index of less than 1.55 and high refractive index layers having a refractive index of 1.55 or more (preferably 1.80 or more). As the low refractive index layer, for example, a silicon oxide layer, a magnesium fluoride layer, or a silicon fluoride layer with a thickness of about 10 to 500 nm may be used. As the high refractive index layer, for example, a zirconium oxide layer, a hafnium oxide layer, or a titanium oxide layer with a thickness of about 10 to 500 nm may be used. The light reflection preventing structure 101 may include two or more low refractive index layers and two or more high refractive index layers, or may include three or more layers having different refractive indexes. When the light reflection preventing structure 101 is a laminate including low refractive index layers and high refractive index layers, the uppermost layer of the laminate may be a low refractive index layer such as a silicon oxide layer. Alternatively, the light reflection preventing structure 101 may be a coating layer made of a material having a lower refractive index than a material of the base material layer 21 of the light diffusion sheet 43.

In addition, the light reflection preventing structure 101 may be, for example, a moth-eye structure having a fine relief with a height difference 1 µm or less on the surfaces of the plurality of depressed portions 22 (in the present example, the four inclined surfaces of an approximately inverted square pyramid). The moth-eye structure has a structure in which projections are densely arranged with structures having a wavelength of incident light or lower, specifically, a structure in which a fine relief of a nanometer size is uniformly arranged. The structure reduces the light reflectance of the first surface 43 having the plurality of depressed portions 22. The moth-eye structure may be formed during molding of the light diffusion sheet 43 or may be formed by surface treatment after molding of the light diffusion sheet 43.

### <Advantageous effects of embodiment>

The light diffusion sheet 43 of the present embodiment has the plurality of depressed portions 22 approximately shaped like inverted polygonal pyramids on the first surface 43a, and the light reflection preventing structure 101 is provided on the first surface 43a. Therefore, on the first surface 43a, the light transmittance increases while the light reflectance decreases. This can suppress a reduction in the effect of light diffusion by the depressed portions 22 approximately shaped like inverted polygonal pyramids, the reduction being caused by light reflection on the first surface 43a. Therefore, even when the light diffusion sheet 43 is reduced in thickness, a reduction in brightness uniformity can be suppressed, allowing a further reduction in the thickness of the backlight.

In the light diffusion sheet 43 of the present embodiment, the light reflection preventing structure 101 may be a vapor-deposited layer covering the surfaces of the plurality of depressed portions 22. With this configuration, the light reflection preventing structure 101 is easily provided on the first surface 43a having the plurality of depressed portions 22. In this case, if the vapor-deposited layer includes a silicon oxide layer and a metal oxide layer, the light transmittance and light reflectance on the first surface 43a can be easily adjusted by the light reflection preventing structure 101.

In the light diffusion sheet 43 of the present embodiment, if the light reflection preventing structure 101 is a moth-eye structure, the light reflection preventing structure 101 can be obtained with an excellent light reflection suppressing effect.

In the light diffusion sheet 43 of the present embodiment, if the plurality of depressed portions 22 are shaped approximately like inverted square pyramids, the light diffusion sheet 43 can be obtained with excellent light diffusion.

In the light diffusion sheet 43 of the present embodiment, a second surface 43b on the opposite side from the first surface 43a may be a matte surface or a mirror surface. This can suppress a reduction in the effect of light diffusion by the depressed portions 22 approximately shaped like inverted polygonal pyramids, the reduction being caused by the shape of the second surface 43b.

The thickness of the light diffusion sheet 43 may be 50 µm or more and 1200 µm or less. This can reduce the thickness of the backlight unit 40 and the liquid crystal display 50 while obtaining the effect of light diffusion by the light diffusion sheet 43.

The backlight unit 40 of the present embodiment is built into the liquid crystal display device 50 so as to guide light emitted from the plurality of small light sources 42 to the display screen 50, and includes the light diffusion sheet 43 of the present embodiment between the display screen 50 and the plurality of small light sources 42. Therefore, even when the light diffusion sheet 43 is reduced in thickness, a reduction in brightness uniformity can be suppressed, allowing a further reduction in thickness.

In the backlight unit 40 of the present embodiment, the light diffusion sheet 43 may be disposed with the first surface 43a facing the display screen 50a. This configuration can avoid a reduction in the effect of light diffusion by the depressed portions 22 of the first surface 43a when light passes through the second surface 43b. If the first surface 43a has the light reflection preventing structure 101 for selectively preventing reflection of light (vertical incident light) incident in the normal direction of the sheet surface of the light diffusion sheet 43, that is, the light reflection preventing structure 101 in which vertical incident light has a higher transmittance than other incident light beams, the light diffusion sheet 43 may be disposed with the second surface 43 facing the display screen 50a.

In the backlight unit 40 of the present embodiment, the plurality of stacked light diffusion sheets 43 may be disposed between the display screen 50a and the small light source 42. The brightness uniformity increases with the number of light diffusion sheets 43.

In the backlight unit 40 of the present embodiment, the color conversion sheet 44 for converting the wavelength of light may be further provided between the plurality of small light sources 42 and the light diffusion sheet 43. This eliminates the need for an expensive white light source, thereby reducing the cost. In addition, a reduction in the effect of light diffusion by the light diffusion sheet 43 can be avoided when light passes through the color conversion sheet 44.

In the backlight unit 40 of the present embodiment, the plurality of small light sources 42 may be two-dimensionally arranged with a pitch of 10 mm or less. Thus, the light diffusion sheet 43 having the light reflection preventing structure 101 can sufficiently obtain the effect of suppressing a reduction in brightness uniformity.

In the backlight unit 40 of the present embodiment, the plurality of small light sources 42 may be arranged on the reflective sheet 41 provided in a direction opposite to the display screen 50a as viewed from the light diffusion sheet 43. Thus, multiple reflection between the reflective sheet 41 and the light diffusion sheet 43 further improves brightness uniformity.

The liquid crystal display device 50 of the present embodiment includes the backlight unit 40 according to the present embodiment and the liquid crystal display panel 5. According to the liquid crystal display device 50 or the information device including the liquid crystal display device 50, the backlight unit 40 includes the light diffusion sheet 43 of the present embodiment. Thus, even when the light diffusion sheet 43 is reduced in thickness, a reduction in brightness uniformity can be suppressed, allowing a further reduction in thickness.

### (Examples and comparative examples)

### <Evaluation sample>

As the light diffusion sheet 43 of examples and comparative examples, evaluation samples of polycarbonate with a thickness of 110 µm were prepared. A diffusing agent was not added to any of the evaluation samples, and depressed portions shaped like inverted square pyramids (inverted pyramids) having a depth of 50 µm and a vertex angle of 90° were arranged in a two-dimensional matrix with 100-µm pitches on one surface of the light diffusion sheet 43, and the other surface was formed as a matte surface. In the light diffusion sheet 43 of a first example, a deposited layer was formed as the light reflection preventing structure 101 only on the depressed-portion forming surface. In the light diffusion sheet 43 of a second example, a deposited layer was formed as the light reflection preventing structure 101 on each of the depressed-portion forming surface and the matte surface. No vapor-deposited layer was formed on both surfaces of the light diffusion sheet 43 of a first comparative example.

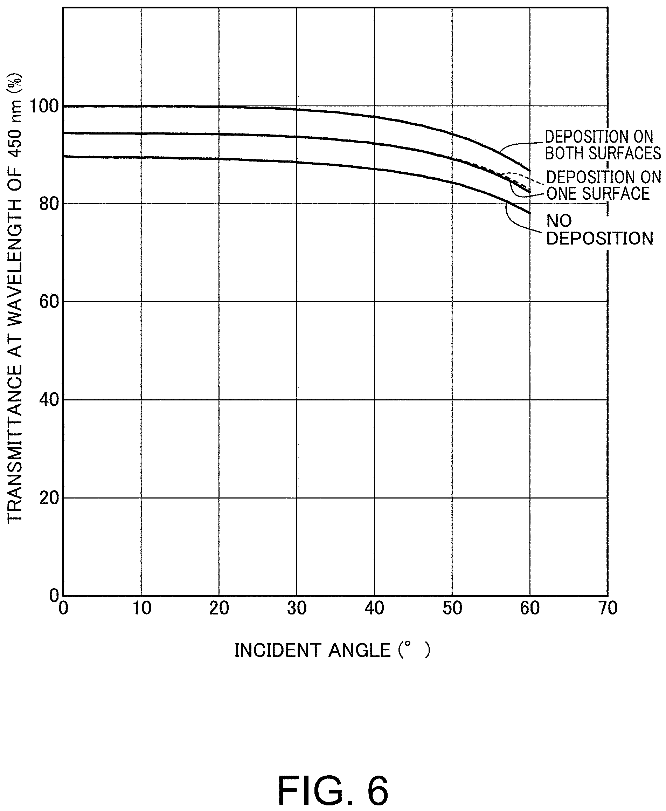

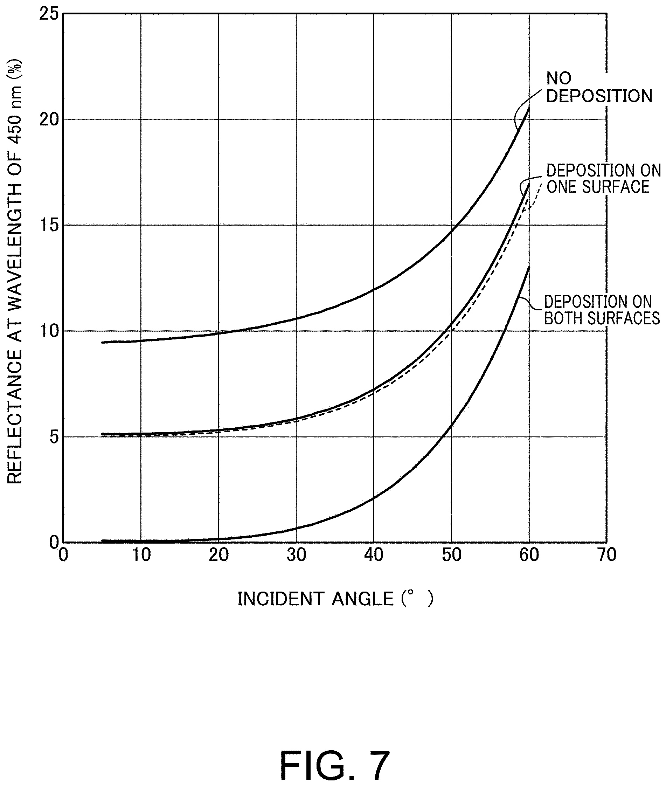

As the light reflection preventing structure 101, a vapor-deposited layer having a thickness of about 200 nm was used, in which a ZrO₂ thin film and a SiO₂ thin film are alternately stacked. Figs. 6 and 7 show the incident angle dependence of transmittance and reflectance with respect to light having a wavelength of 450 nm when the vapor-deposited layer is provided on a polycarbonate sheet having a thickness of 100 µm with mirror-finished surfaces. For the measurement of transmittance and reflectance, an apparatus in which the automatic absolute reflectance measuring system ARMN-920 is installed on the spectrophotometer V-770 of JASCO Corporation was used. As shown in Figs. 6 and 7, the provision of the vapor-deposited layer on one surface of the sheet increased the transmittance by about 5% or more and reduced the reflectance by about 5% or more over a wide range (0° to 60°) of the incident angle of light entering the sheet (the angle of inclination with respect to the normal to the sheet surface). Furthermore, the provision of the vapor-deposited layer on both surfaces of the sheet increased the transmittance by about 10% or more and reduced the reflectance by about 10% or more over a wide range (0° to 60°) of the incident angle of light entering the sheet. Figs. 6 and 7 do not show transmittance and reflectance when the incident angle exceeds 60°. Even when the incident angle exceeds 60°, the provision of the vapor-deposited layer can obtain the effect of increasing the transmittance and the effect of reducing the reflectance as in the case of the incident angle of 60° or less.

In Figs. 6 and 7, in the case where the vapor-deposited layer is provided only on one surface of the sheet, the solid line shows transmittance and reflectance when light is incident from the non-vapor-deposited surface, and the broken line shows transmittance and reflectance when light is incident from the vapor-deposited surface. As shown in Figs. 6 and 7, in the case where the vapor-deposited layer is provided only on one surface of the sheet, no significant difference was observed in transmittance and the reflectance when light is incident from either the vapor-deposited surface or the non-vapor-deposited surface.

### <Brightness uniformity evaluation>

For the light diffusion sheets 43 of the first and second examples and the first comparative examples, the backlight unit 40 in Fig. 2 was configured to evaluate brightness uniformity.

Specifically, the three light diffusion sheets 43 having the same structure were stacked above the small light sources 42, which were two-dimensionally arranged on the reflective sheet 41, with the color conversion sheet 44 interposed between the light diffusion sheets 43 and the small light sources 42, the light diffusion sheets 43 having the depressed-portion forming surface serving as the light emission surface. The first prism sheet 45 and the second prism sheet 46 were arranged thereon. A QD sheet was used as the color conversion sheet 44. The prism sheets 45 and 46 were formed by providing projecting prism portions on a base material layer composed of a PET film, by using a UV-curable acrylic resin composed of acrylate. The total thickness of the first prism sheet 45 was 90 µm, and the projecting prism portions having a height of 12 µm and a vertex angle of 90° were arranged with 24-µm pitches on the first prism sheet 45. The total thickness of the second prism sheet 46 was 155 µm, and the projecting prism portions having a height of 25 µm and a vertex angle of 90° were arranged with 50-µm pitches on the second prism sheet 46. The first prism sheet 45 and the second prism sheet 46 were arranged such that the array direction of the small light sources 42 and the prism extending direction of the second prism sheet 46 intersect at an angle of 40° and the prism extending direction of the second prism sheet 46 and the prism extending direction of the first prism sheet 45 intersect at an angle of 90°. Furthermore, although not shown in Fig. 2, a restraint glass for restraining each sheet was disposed on the second prism sheet 46 with an upper light diffusion sheet (top diffuser) interposed therebetween. The upper light diffusion sheet was obtained by applying a diffusing bead coating to one surface of a PET film and applying an antiadhesive bead coating to the other surface.

The brightness uniformity was evaluated by using blue LEDs as the small light sources 42 of the backlight unit 40 in three patterns: (1) a square array of 2.8 mm pitches (hereinafter referred to as a light source array A), (2) a two-dimensional array of 3.5 mm long and 4.5 mm wide (hereinafter referred to as a light source array B), and (3) a square array of 10-mm pitches (hereinafter referred to as a light source array C). The evaluation was conducted as follows: first, a two-dimensional spectroradiometer SR-5000 manufactured by Topcon Techno House Co., Ltd. was used to measure brightness in the upward and vertical direction (in the direction from the light source to the restraint glass). Next, the two-dimensional brightness distribution of a 40-mm square range was obtained using a brightness unevenness measuring instrument, the entire brightness balance was corrected, the mean value and the standard deviation of brightness were calculated, and then the brightness uniformity was determined as "brightness uniformity" = "(mean value of brightness) / (standard deviation of brightness)".

### <Evaluation results>

In the light source array A, the brightness uniformity of the light diffusion sheet 43 in the first comparative example was 106.9, whereas the brightness uniformity of the light diffusion sheet 43 in the first example was 117.7 and the brightness uniformity of the light diffusion sheet 43 in the second example was 112.1.

In the light source array B, the brightness uniformity of the light diffusion sheet 43 in the first comparative example was 37.8, whereas the brightness uniformity of the light diffusion sheet 43 in the first example was 40.8 and the brightness uniformity of the light diffusion sheet 43 in the second example was 39.2.

In the light source array C, the brightness uniformity of the light diffusion sheet 43 in the first comparative example was 14.6, whereas the brightness uniformity of the light diffusion sheet 43 in the first example was 15.0 and the brightness uniformity of the light diffusion sheet 43 in the second example was 14.7.

The above results proved that in any of the light source arrays A to C, the brightness uniformity is increased by providing the light reflection preventing structure 101 on the forming surface (first surface 43a) of the depressed portions 22 of the light diffusion sheet 43. In particular, in the first example in which the light reflection preventing structure 101 was provided only on the first surface 43a, the brightness uniformity was increased by about 3% to 10% as compared with the first comparative example. In contrast, in the second example in which the light reflection preventing structure 101 was further provided on the second surface 43b having no depressed portions 22, the brightness uniformity slightly decreased as compared with the first example. Note that in both of the first and second examples, a reduction in brightness due to the light reflection preventing structure 101 was about 1 to 2%, which is negligible unlike in the first comparative example.

### (Additional examples and additional comparative example)

### <Evaluation sample>

As the light diffusion sheet 43 of additional examples and an additional comparative example, evaluation samples of polycarbonate with a thickness of 110 µm were prepared. A diffusing agent was not added to any of the evaluation samples, and depressed portions shaped like inverted square pyramids (inverted pyramids) having a depth of 50 µm and a vertex angle of 90° were arranged in a two-dimensional matrix with 100-µm pitches on one surface of the light diffusion sheet 43, and the other surface was formed as a matte surface. In the light diffusion sheet 43 of a third example, a vapor-deposited layer was formed as the light reflection preventing structure 101 only on the depressed-portion forming surface. In the light diffusion sheet 43 of a fourth example, a vapor-deposited layer was formed as the light reflection preventing structure 101 on each of the depressed-portion forming surface and the matte surface. No vapor-deposited layer was formed on both surfaces of the light diffusion sheet 43 of a second comparative example.

The light reflection preventing structure 101 used in the first and second examples exhibited the effect of preventing light reflection over a wide range of the incident angle of light entering the light diffusion sheet 43 (the angle of inclination with respect to the normal to the sheet surface of the light diffusion sheet 43) (see Figs. 6 and 7). In contrast, in the third and fourth examples, the light reflection preventing structure 101 for selectively preventing reflection of light (vertical incident light) incident in the normal direction of the sheet surface of the light diffusion sheet 43, that is, the light reflection preventing structure 101 in which vertical incident light has a higher transmittance than other incident light beams was provided on the first surface 43a. Specifically, as the light reflection preventing structure 101 of the third and fourth example, a vapor-deposited layer having a thickness of about 600 nm was formed by alternately stacking TiO₂ thin films and SiO₂ thin films.

### <Brightness uniformity evaluation>

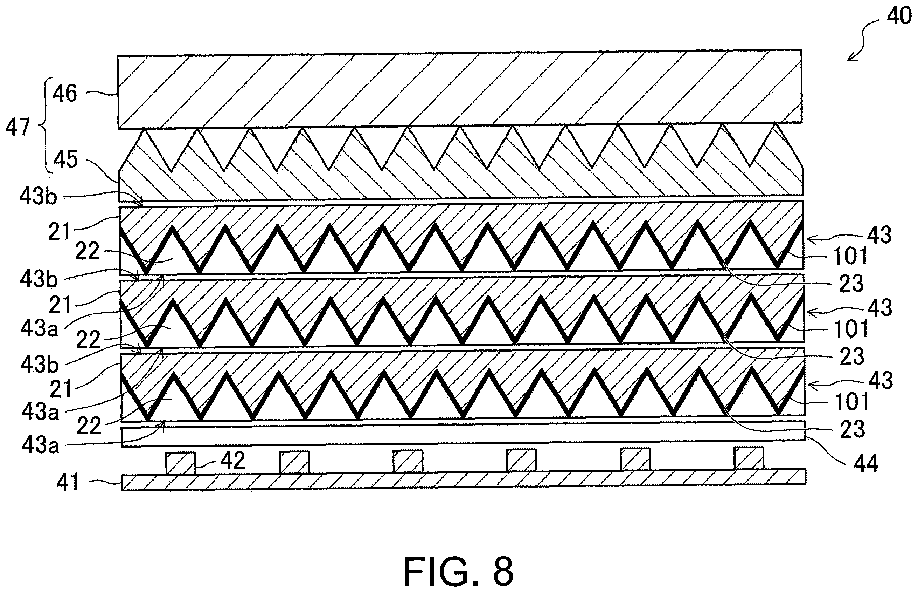

For the light diffusion sheets 43 of the third and fourth examples and the second comparative examples, the backlight unit 40 in FIG. 8 was configured to evaluate brightness uniformity. The backlight unit 40 in FIG. 8 is different from the backlight unit 40 in FIG. 2 in that the three light diffusion sheets 43 are arranged with the first surface 43a (recessed-part forming surface) serving as a light emission surface.

Specifically, the three light diffusion sheets 43 having the same structure were stacked above the small light sources 42, which were two-dimensionally arranged on the reflective sheet 41, with the color conversion sheet 44 interposed between the light diffusion sheets 43 and the small light sources 42, the light diffusion sheets 43 having the recessed-part forming surface serving as the light entrance surface. The first prism sheet 45 and the second prism sheet 46 were arranged thereon. A QD sheet was used as the color conversion sheet 44. The prism sheets 45 and 46 were formed by providing projecting prism portions on a base material layer composed of a PET film, by using a UV-curable acrylic resin composed of acrylate. The total thickness of the first prism sheet 45 was 130 µm, and the projecting prism portions having a height of 20 µm and a vertex angle of 90° were arranged with 40-µm pitches on the first prism sheet 45. The total thickness of the second prism sheet 46 was 90 µm, and the projecting prism portions having a height of 12 µm and a vertex angle of 90° were arranged with 24-µm pitches on the second prism sheet 46. The first prism sheet 45 and the second prism sheet 46 were arranged such that the array direction of the small light sources 42 and the prism extending direction of the second prism sheet 46 intersect at an angle of 40° and the prism extending direction of the second prism sheet 46 and the prism extending direction of the first prism sheet 45 intersect at an angle of 90°. Furthermore, although not shown in Fig. 8, a restraint glass for restraining each sheet was disposed on the second prism sheet 46 with an upper light diffusion sheet (top diffuser) interposed therebetween. The upper light diffusion sheet was obtained by applying a diffusing bead coating to one surface of a PET film and applying an antiadhesive bead coating to the other surface.

The brightness uniformity was evaluated by using blue LEDs arranged as the small light sources 42 of the backlight unit 40 in the light source array B as follows: first, a two-dimensional spectroradiometer SR-5000 manufactured by Topcon Techno House Co., Ltd. was used to measure brightness in the upward and vertical direction (in the direction from the light source to the restraint glass). Next, the two-dimensional brightness distribution of a 40-mm square range was obtained using a brightness unevenness measuring instrument, the entire brightness balance was corrected, the mean value and the standard deviation of brightness were calculated, and then the brightness uniformity was determined as "brightness uniformity" = "(mean value of brightness) / (standard deviation of brightness)".

### <Evaluation results>

The brightness uniformity of the light diffusion sheet 43 in the second comparative example was 14.0, whereas the brightness uniformity of the light diffusion sheet 43 in the third example was 17.1 and the brightness uniformity of the light diffusion sheet 43 in the fourth example was 15.8.

The above results proved that the brightness uniformity is increased by providing the light reflection preventing structure 101 on the forming surface (first surface 43a) of the depressed portions 22 of the light diffusion sheet 43. In particular, in the third example in which the light reflection preventing structure 101 was provided only on the first surface 43a, the brightness uniformity was increased by about 22% as compared with the second comparative example. In the fourth example in which the light reflection preventing structure 101 was further provided on the second surface 43b having no depressed portions 22, the brightness uniformity was increased by about 13% as compared with the second comparative example.

### (Other embodiments)

The embodiment (including modifications and examples, the same applies hereinafter) of the present disclosure has been described above. The present disclosure is not solely limited to the embodiment, and various modifications can be made within the scope of the disclosure. In other words, the description of the embodiment is illustrative in nature and is not intended to limit the present disclosure, its applications, or its uses. For example, it is needless to say that the configuration (including the layer structure and the material) of the light diffusion sheet is not limited to the configuration of the light diffusion sheet 43 of the foregoing embodiment. In addition, it is needless to say that the configuration of the backlight unit to which the light diffusion sheet is applied and the configuration of the liquid crystal display device including the backlight unit are not limited to the configurations of the backlight unit 40 and the liquid crystal display device 50 of the foregoing embodiment.

### [Reference Signs List]

- 1: TFT substrate
- 2: CF substrate
- 3: Liquid crystal layer
- 5: Liquid crystal display panel
- 6: First polarizing plate
- 7: Second polarizing plate
- 21: Base material layer
- 22: Depressed portion
- 23: Ridgeline
- 40: Backlight unit
- 41: Reflective sheet
- 42: Small light source
- 43: Light diffusion layer
- 43a: First surface
- 43b: Second surface
- 44: Color conversion sheet
- 45: First prism sheet
- 46: Second prism sheet
- 47: Brightness enhancement sheet
- 50: Liquid crystal display device
- 50a: Display screen
- 101: Light reflection preventing structure

## Claims

1. A light diffusion sheet having a plurality of depressed portions approximately shaped like inverted polygonal pyramids on a first surface,
the first surface having a light reflection preventing structure.

2. The light diffusion sheet according to claim 1, wherein the light reflection preventing structure is a vapor-deposited layer covering surfaces of the plurality of depressed portions.

3. The light diffusion sheet according to claim 2, wherein the vapor-deposited layer includes a silicon oxide layer and a metal oxide layer.

4. The light diffusion sheet according to claim 1, wherein the light reflection preventing structure is a moth-eye structure.

5. The light diffusion sheet according to claim 1, wherein the plurality of depressed portions are shaped approximately like inverted square pyramids.

6. The light diffusion sheet according to claim 1, wherein a second surface on an opposite side to the first surface is a mat surface or a mirror surface.

7. A backlight unit that is built into a liquid crystal display device and guides light emitted from a plurality of light sources to a display screen,
the backlight unit comprising the light diffusion sheet according to any one of claims 1 to 6 between the display screen and the plurality of light sources.

8. The backlight unit according to claim 7, wherein the light diffusion sheet is disposed with the first surface facing the display screen.

9. The backlight unit according to claim 7, wherein the light diffusion sheet is disposed with a second surface facing the display screen, the second surface being located on an opposite side from the first surface.

10. The backlight unit according to claim 7, wherein the plurality of stacked light diffusion sheets are disposed between the display screen and the plurality of light sources.

11. The backlight unit according to claim 7, further comprising a color conversion sheet that converts a wavelength of the light between the plurality of light sources and the light diffusion sheet.

12. The backlight unit according to claim 7, wherein the plurality of light sources are two-dimensionally arranged with a pitch or 10 mm or less.

13. A liquid crystal display device comprising: the backlight unit according to claim 7; and
a liquid crystal display panel.

14. An information device comprising the liquid crystal display device according to claim 13.
